(19) Europäisches Patentamt
European Patent Office
Office européen des brevets

(11) **EP 3 238 337 B1**

(12) **EUROPÄISCHE PATENTSCHRIFT**

(45) Veröffentlichungstag und Bekanntmachung des Hinweises auf die Patenterteilung:
**28.04.2021 Patentblatt 2021/17**

(51) Int Cl.:
***H02P 5/753*** *(2006.01)*  ***H02P 25/20*** *(2006.01)*
***H02P 3/20*** *(2006.01)*

(21) Anmeldenummer: **15825785.7**

(22) Anmeldetag: **22.12.2015**

(86) Internationale Anmeldenummer:
**PCT/AT2015/000162**

(87) Internationale Veröffentlichungsnummer:
**WO 2016/100991 (30.06.2016 Gazette 2016/26)**

(54) **VERFAHREN ZUM BETREIBEN EINES ANTRIEBSSTRANGES**

METHOD FOR OPERATION OF A DRIVE TRAIN

PROCÉDÉ DE FONCTIONNEMENT DE TRANSMISSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2014 AT 9302014**

(43) Veröffentlichungstag der Anmeldung:
**01.11.2017 Patentblatt 2017/44**

(73) Patentinhaber: **Hehenberger, Gerald**
**9020 Klagenfurt (AT)**

(72) Erfinder: **Hehenberger, Gerald**
**9020 Klagenfurt (AT)**

(74) Vertreter: **Beer & Partner Patentanwälte KG**
**Lindengasse 8**
**1070 Wien (AT)**

(56) Entgegenhaltungen:
**WO-A1-2005/074120    WO-A1-2014/183142**
**DE-C1- 19 502 224**

**Beschreibung**

Die Erfindung betrifft ein Verfahren zum Betreiben eines Triebstranges mit einer Antriebswelle, einer Antriebsmaschine und mit einem Differenzialgetriebe mit drei An- bzw. Abtrieben, wobei ein Abtrieb mit der Antriebswelle ein Antrieb mit der Antriebsmaschine und ein zweiter Antrieb mit einem elektrischen Differenzialantrieb verbunden ist.

Ein derartiges Verfahren, bei dem drehzahlstabile Betriebspunkte einerseits bei einer Drehzahl des Differenzialantriebs von Null und andererseits bei einem Übersetzungsverhältnis des Differenzialgetriebes gleich 1 möglich sind, ist aus der WO 2014/183142 A1 bekannt.

Aus der DE 195 02 224 C1 ist ein Hybridantrieb, insbesondere für Kraftfahrzeuge, bekannt, bei dem ein Frequenzumrichter zwischen einem Generator und einem elektrischen Antrieb für einen Notbetrieb mittels einer Umgehungsleitung überbrückt werden kann.

Eine häufig gestellte Anforderung an Arbeitsmaschinen, wie Fördereinrichtungen, z.B. Pumpen, Kompressoren und Ventilatoren, oder wie Mühlen, Brecher, Fahrzeuge, oder wie Energiegewinnungsanlagen usw., ist ein effizienter drehzahlvariabler Betrieb.

Im Weiteren werden elektrische Maschinen als Beispiel für in diesem Zusammenhang eingesetzte Antriebsmaschinen herangezogen, das Prinzip gilt aber für alle möglichen Arten von Antriebsmaschinen, so wie z.B. für Verbrennungskraftmaschinen.

Die am häufigsten verwendeten elektrischen Antriebe sind heutzutage Drehstrommaschinen, wie z.B. Asynchronmotore und Synchronmotore. Um diese drehzahlvariabel betreiben zu können, werden sie in Kombination mit einem Frequenzumrichter an ein Netz angebunden. Damit kann man zwar einen drehzahlvariablen Betrieb des Antriebs realisieren, die Lösung ist jedoch teuer und mit wesentlichen Wirkungsgradeinbußen verbunden.

Eine vergleichsweise kostengünstigere und auch bezüglich Wirkungsgrad bessere Alternative ist der Einsatz von Differenzialsystemen - beispielsweise gemäß AT 507 394 A. Der Kern eines Differenzialsystems ist ein Differenzialgetriebe, das in einer einfachen Ausführung eine einfache Planetengetriebestufe mit drei An bzw. Abtrieben ist, wobei ein Abtrieb mit der Antriebswelle einer Arbeitsmaschine, ein erster Antrieb mit der Antriebsmaschine und ein zweiter Antrieb mit einem Differenzialantrieb verbunden ist. Damit kann die Arbeitsmaschine bei konstanter Drehzahl der Antriebsmaschine drehzahlvariabel betrieben werden, indem ein drehzahlvariabler Differenzialantrieb eine entstehende Drehzahldifferenz ausgleicht. Dieser drehzahlvariable Differenzialantrieb ist meist eine im Vergleich zur Antriebsmaschine kleine Drehstrommaschine, welche mittels eines entsprechend kleinen Frequenzumrichters an ein Netz angebunden ist.

Frequenzumrichter sind jedoch fehleranfälliger als elektrische Maschinen und haben eine wesentlich kürzere Nutzungsdauer.

Der Erfindung liegt daher die Aufgabe zu Grunde, ein Verfahren der eingangs genannten Art anzugeben, mit dem ein Betrieb des Triebstranges ohne Frequenzumrichter möglich ist.

Gelöst wird diese Aufgabe mit einem Verfahren mit den Merkmalen des Anspruchs 1.

Wenn der Differenzialantrieb alternativ über einen Frequenzumrichter und eine parallel zum Frequenzumrichter liegende Leitung an ein Netz schaltbar ist, liegt der Vorteil erfindungsgemäß darin, dass der Triebstrang wie an sich bekannt über einen Frequenzumrichter betrieben werden kann, dass aber auch wenn der Frequenzumrichter einen Defekt hat bzw. ausfällt, der Triebstrang weiter betrieben werden kann, auch wenn dessen Drehzahlvariabilität wegfällt oder eingeschränkt ist. Bevorzugte Ausführungsformen der Erfindung sind Gegenstand der Unteransprüche.

Nachfolgend werden bevorzugte Ausführungsformen der Erfindung mit Bezug auf die angeschlossenen Zeichnungen erläutert. Es zeigt:

Fig. 1   das Prinzip eines Differenzialsystems für einen Antrieb einer Pumpe gemäß Stand der Technik,
Fig. 2   eine erste Ausführungsform eines Differenzialsystems, das bei der Erfindung verwendet werden kann,
Fig. 3   eine weitere Ausführungsform eines Differenzialsystems, das bei der Erfindung verwendet werden kann,
Fig. 4   die Drehzahl- und Leistungsparameter eines erfindungsgemäßen Differenzialsystems einer Pumpen und
Fig. 5   eine Kennlinie einer Drehstrommaschine.

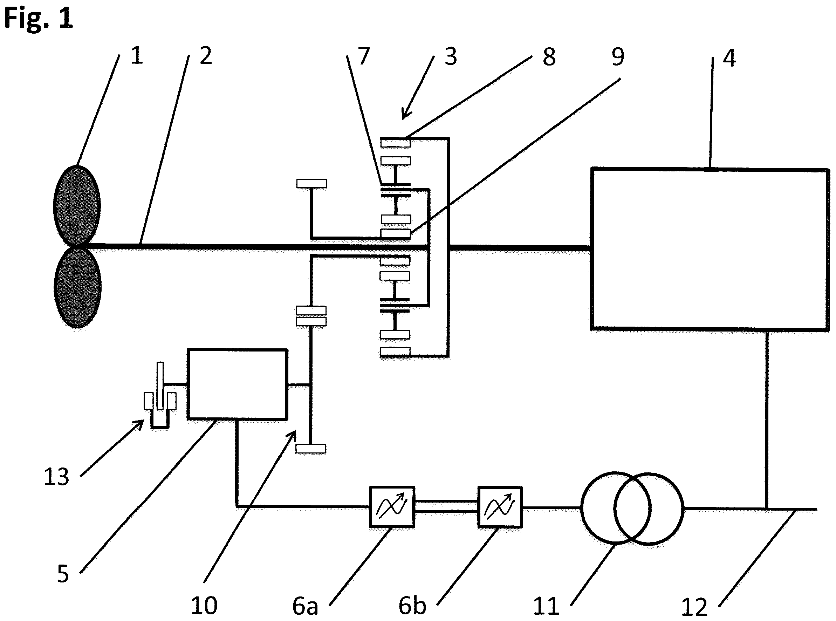

Fig. 1 zeigt das Prinzip eines Differenzialsystems für einen Triebstrang am Beispiel einer Pumpe. Dabei ist die Arbeitsmaschine 1 der Rotor einer Pumpe, welcher über eine Antriebswelle 2 und ein Differenzialgetriebe 3 von einer Antriebsmaschine 4 angetrieben wird. Die Antriebsmaschine 4 ist vorzugsweise eine Mittelspannungs-Drehstrommaschine, welche an ein Netz 12, welches im gezeigten Beispiel aufgrund einer Mittelspannungs-Drehstrommaschine ein Mittelspannungsnetz ist, angeschlossen wird. Das gewählte Spannungsniveau hängt jedoch vom Einsatzfall und vor allem dem Leistungsniveau der Antriebsmaschine 4 ab und kann, ohne Einfluss auf die Grundfunktion des erfindungsgemäßen Systems, jedes gewünschte Spannungsniveau haben. Entsprechend der Polpaarzahl der Antriebsmaschine 4 ergibt sich ein bauartspezifischer Betriebsdrehzahlbereich. Der Betriebsdrehzahlbereich ist dabei jener Drehzahlbereich, in dem die Antriebsmaschine 4 ein definiertes oder gewünschtes bzw. erforderliches Drehmoment liefern kann bzw. im Falle einer elektrischen Antriebsmaschine mit dem Netz 12 synchronisiert werden kann. Ein Planetenträger 7 ist mit der Antriebswelle 2 verbunden, eine Antriebsmaschine 4 mit einem Hohlrad 8 und ein Sonnenrad 9 des Differenzialgetriebes 3 mit dem Differenzialantrieb 5. Der Kern des Differenzialsystems ist in dieser Ausführungsform somit eine einfache Planetengetriebestufe mit drei An- bzw. Abtrieben, wobei ein Abtrieb mit der Antriebswelle 2 der Arbeitsmaschine 1, ein erster Antrieb mit der Antriebsmaschine 4 und ein zweiter Antrieb mit dem Differenzialantrieb 5 verbunden ist.

Der Triebstrang besteht damit im Wesentlichen aus Antriebsmaschine 4, Differenzialgetriebe 3 und Differenzialantrieb 5.

Um den Drehzahlbereich des Differenzialantriebs 5 optimal anpassen zu können, wird ein Anpassungsgetriebe 10 zwischen dem Sonnenrad 9 und dem Differenzialantrieb 5 implementiert. Alternativ zur gezeigten Stirnradstufe kann das Anpassungsgetriebe 10 beispielsweise auch mehrstufig sein bzw. als Zahnriemen oder Kettentrieb und/oder Planetenstufe oder Winkelgetriebe ausgeführt werden. Mit dem Anpassungsgetriebe 10 kann man darüber hinaus einen Achsversatz für den Differenzialantrieb 5 realisieren, der aufgrund der koaxialen Anordnung der Arbeitsmaschine 1 und der Antriebsmaschine 4 eine einfache Ausführung des Differenzialantriebes 5 ermöglicht. Mit dem Differenzialantrieb 5 ist eine Motorbremse 13 verbunden, welche den Differenzialantrieb 5 bei Bedarf bremst. Elektrisch ist der Differenzialantrieb 5 mittels eines vorzugsweisen Niederspannungs-Frequenzumrichters, bestehend aus einem - je nach Betriebsart als Motor oder Generator - differentialantriebsseitigen Gleich- bzw. Wechselrichter 6a und einem netzseitigen Wechsel- bzw. Gleichrichter 6b, und einem Transformator 11 an das Netz 12 angebunden. Der Transformator gleicht allfällige vorhandene Spannungsdifferenzen zwischen dem Netz 12 und dem netzseitigen Wechsel- bzw. Gleichrichter 6b aus und kann bei Spannungsgleichheit zwischen der Antriebsmaschine 4, dem netzseitigen Wechsel- bzw. Gleichrichter 6b und dem Netz 12 entfallen. Der Gleich- bzw. Wechselrichter 6a und der Wechsel- bzw. Gleichrichter 6b sind durch einen Gleichstromzwischenkreis verbunden und können bei Bedarf örtlich getrennt sein, wobei vorzugsweise der differentialantriebsseitige Gleich- bzw. Wechselrichter 6a so nah wie möglich beim Differenzialantrieb 5 positioniert ist.

Um eine hohe Ausfallsicherheit des Gesamtsystems zu erzielen, kann der Frequenzumrichter auch redundant, wie z.B. in der WO 2012/001138 A vorgeschlagen, ausgeführt werden.

Wesentlicher Vorteil eines Differenzialsystems ist, dass die Antriebsmaschine 4, sofern es sich um eine elektrische Maschine handelt, direkt, das heißt ohne Leistungselektronik, an ein Netz 12 angebunden werden kann. Der Ausgleich zwischen variabler Rotordrehzahl und fixer Drehzahl der netzgebundenen Antriebsmaschine 4 wird durch den drehzahlvariablen Differenzialantrieb 5 realisiert.

Die Drehmomentgleichung für das Differenzialsystem lautet:

$$\text{Drehmoment}_{\text{Differenzialantrieb}} = \text{Drehmoment}_{\text{Antriebswelle}} * y / x,$$

wobei der Größenfaktor y/x ein Maß für die Übersetzungsverhältnisse im Differenzialgetriebe 3 und im Anpassungsgetriebe 10 ist. Die Leistung des Differenzialantriebs 5 ist im Wesentlichen proportional dem Produkt aus prozentueller Abweichung der Pumpendrehzahl von deren Grunddrehzahl x Antriebswellenleistung. Dementsprechend erfordert ein großer Drehzahlbereich grundsätzlich eine entsprechend große Dimensionierung des Differenzialantriebs 5. Darin ist auch der Grund zu sehen, warum Differenzialsysteme für kleine Drehzahlbereiche besonders gut geeignet sind, wobei aber grundsätzlich jeder Drehzahlbereich realisierbar ist.

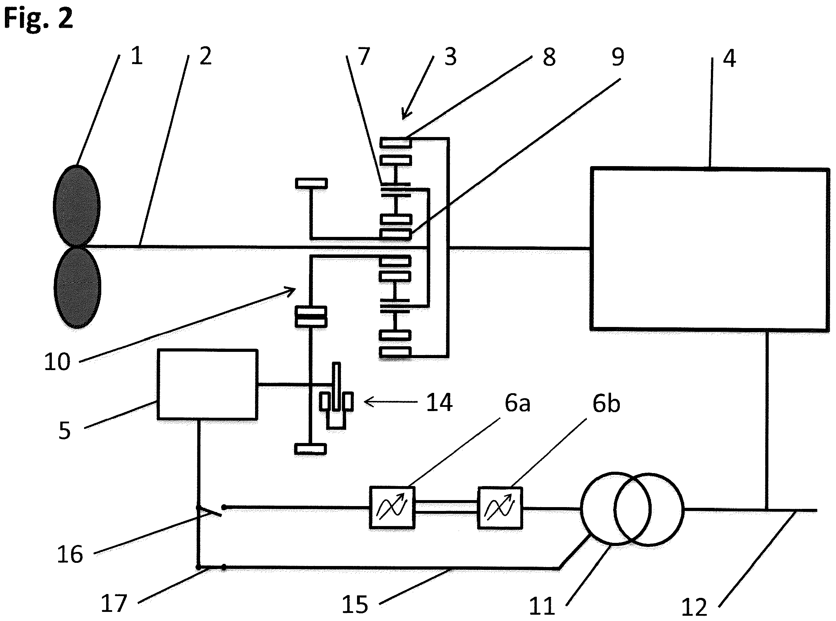

Fig. 2 zeigt eine Ausführungsform eines Differenzialsystems, das bei der Erfindung verwendet werden kann. Der gezeigte Triebstrang weist auch hier wie in Fig. 1 eine Antriebsmaschine 4, ein Differenzialgetriebe 3, einen Differenzialantrieb 5 und einen Frequenzumrichter 6a, 6b auf, welcher mittels eines Transformators 11 an ein Netz 12 angeschlossen ist. Auch hier wird eine Arbeitsmaschine 1 mittels einer Antriebswelle 2 angetrieben.

Der Transformator gleicht bei Bedarf vorhandene Spannungsdifferenzen zwischen dem Netz 12 und dem Differenzialantrieb 5 aus und kann bei Spannungsgleichheit entfallen.

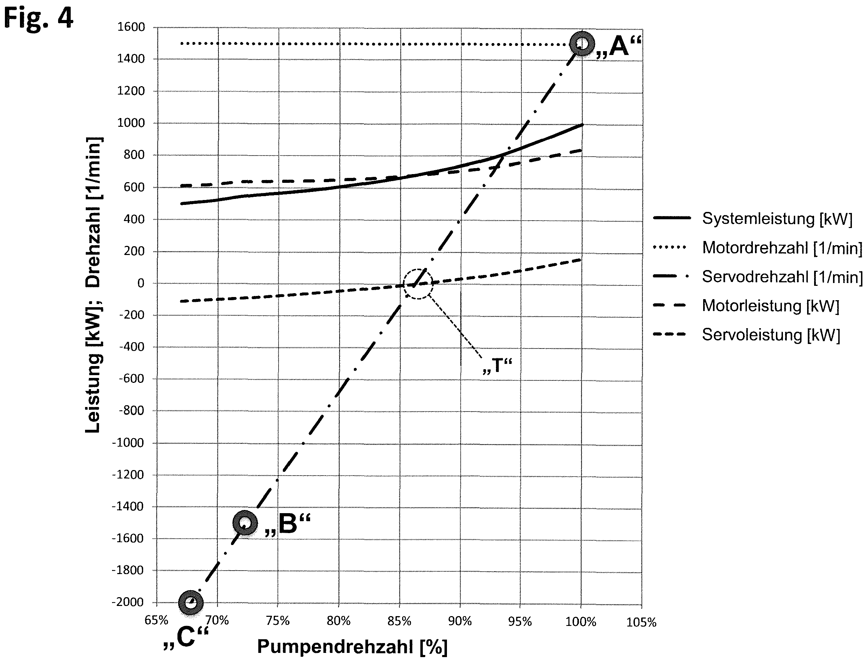

Die Motorbremse 14 ist in dieser Ausführungsvariante (alternativ zur Position der Motorbremse 13 in Fig. 1) zwischen Differenzialantrieb 5 und Sonnenrad 9 positioniert. Sie ist beispielhaft mit einer Zahnradwelle des Anpassungsgetriebes 10 verbunden, kann aber entsprechend den konstruktiven Erfordernissen grundsätzlich überall zwischen Sonnenrad 9 und Differenzialantrieb 5 angeordnet sein. Damit kann der Differenzialantrieb 5 für eine allfällig notwendige Reparatur abgebaut und das Differenzialsystem trotzdem mit einer Grunddrehzahl "T" (Fig. 4) weiter betrieben werden.

Alternativ zur Motorbremse 13 und/oder 14 kann jede Art einer kraft- und/oder formschlüssigen Arretierung bzw. Sperre vorgesehen werden. Diese Arretierung ist entweder standardmäßig vorgesehen oder wird bei Bedarf eingesetzt.

Frequenzumrichter 6a, 6b sind jedoch, wie schon eingangs erwähnt, fehleranfälliger als elektrische Maschinen und haben eine wesentlich kürzere Nutzungsdauer. Aus diesem Grund ist es für einen Anlagenbetreiber wichtig eine Lösung zu haben, welche eine Fortsetzung des Betriebes ermöglicht, sobald ein Frequenzumrichter nicht (mehr) betriebsbereit ist.

Gelöst wird diese Aufgabe erfindungsgemäß dadurch, dass man, im Fehlerfall des Frequenzumrichters 6a, 6b, diesen vom Differenzialantrieb 5 trennt und den Differenzialantrieb 5 direkt (oder sofern erforderlich über einen Transformator 11) über eine Leitung 15 mit dem Netz 12 verbindet. Dazu sind zwei Schalter 16, 17 vorgesehen, mit denen der Differenzialantrieb 5 alternativ an den Frequenzumrichter 6a, 6b oder an die Leitung 15 geschalten werden kann. Damit kann wenigstens ein drehzahlfester Betriebspunkt eingestellt werden.

Wird der Differenzialantrieb 5 als polumschaltbare Drehstrommaschine ausgeführt, können mindestens zwei, jedoch bei Bedarf auch mehrere Synchrondrehzahlen realisiert werden, indem man zwei oder mehrere elektrisch getrennte Wicklungen im Stator der Drehstrommaschine unterbringt. Üblich sind Paarungen von 4 und 6 oder 4 und 8 Polen. So hat z.B. in einem 50Hz-Netz eine 4-pol Drehstrommaschine eine Synchrondrehzahl von 1.500 1/min, eine 6-pol Drehstrommaschine eine Synchrondrehzahl von 1.000 1/min und eine 8-polige Drehstrommaschine eine Synchrondrehzahl von 750 1/min.

D.h. man kann damit, entsprechend einer implementierten Polumschaltbarkeit, zwei oder mehrere drehzahlfeste Betriebspunkte für die Arbeitsmaschine (1) realisieren. Aber auch wenn der Differenzialantrieb 5 nicht polumschaltbar ist, kann der Triebstrang immer noch mit der (einen) Synchrondrehzahl weiter betrieben werden. Ein weiterer drehzahlfester Betriebspunkt für die Arbeitsmaschine (1) liegt bei der Grunddrehzahl "T". Das ist der Betriebspunkt, bei dem das Sonnenrad (9) steht, z.B. wenn die Bremse 13, 14 aktiviert ist.

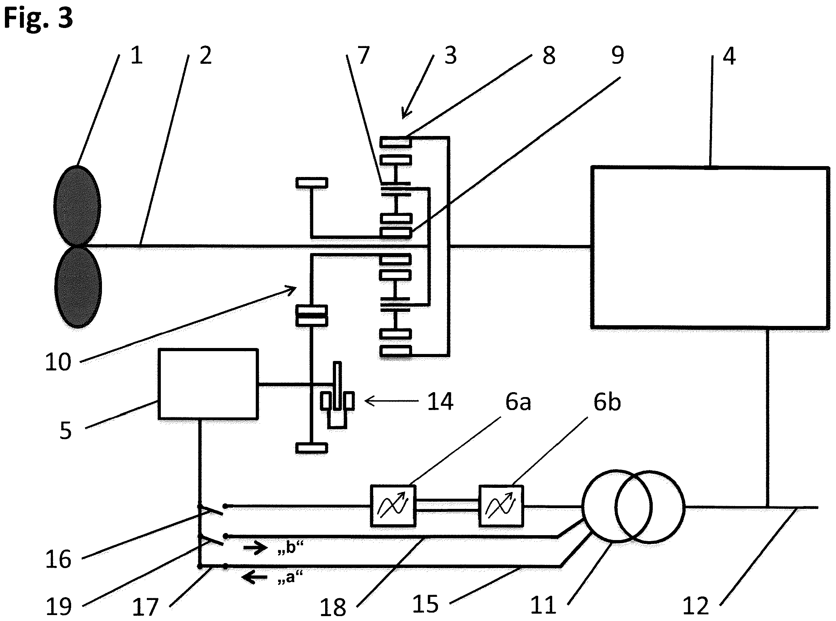

Fig. 3 zeigt eine weitere Ausführungsform eines Differenzialsystems, das bei der Erfindung verwendet werden kann. Grundsätzlich ist das Differenzialsystem gleich wie in Fig. 2 dargestellt aufgebaut. In dieser erfindungsgemäßen Erweiterung des Systems, kann der als Drehstrommaschine ausgeführte Differenzialantrieb 5 mit unterschiedlicher Drehfeldrichtung mit dem Netz 12 verbunden werden.

Zur Änderung der Drehrichtung muss der Drehsinn des Ständerdrehfeldes geändert werden. Beim Betrieb am Drehstromnetz genügt dabei das Vertauschen zweier Außenleiter, z. B. der Außenleiter L1 und L3. Eine übliche Schaltung dazu ist die Wende-Schützschaltung.

In der praktischen Anwendung werden die Motorklemmen U2, V2 und W2 gebrückt und beim rechten Drehfeld: L1 an U1, L2 an V1 und L3 an W1, bzw. beim linken Drehfeld: L1 an W1, L2 an V1 und L3 an U1 geschaltet. Durch die Änderung des Drehfeldes arbeitet der Differenzialantrieb 5 entweder als Motor (Leistungsflussrichtung "a") oder als Generator (Leistungsflussrichtung "b"). Damit ergibt sich für die Arbeitsmaschine 1 ein weiterer drehzahlfester Betriebspunkt. Ist die Drehstrommaschine polumschaltbar, erhält man entsprechend mehr zusätzliche drehzahlfeste Betriebspunkte.

Bei der Ausführungsform von Fig. 3 symbolisiert die Leitung 15 das Drehfeld, mit dem der Differenzialantrieb 5 in den motorischen Bereich dreht und somit der Leistungsfluss Richtung "a" geht. Eine weitere Leitung 18, welche mittels Schalter 19 mit dem Differenzialantrieb 5 verbunden werden kann, symbolisiert das Drehfeld, mit dem der Differenzialantrieb 5 in den generatorischen Bereich dreht und somit der Leistungsfluss Richtung "b" geht. In der Praxis kann natürlich auch nur eine der beiden Leitungen 15, 18 existieren und zur Änderung der Drehrichtung z.B. die Außenleiter wie beschrieben verschaltet werden.

D.h. in einem Differenzialsystem gem. Fig. 3 sind zumindest drei drehzahlfeste Betriebspunkte realisierbar - unter Einsatz einer polumschaltbaren Drehstrommaschine mindestens 5. In einer vereinfachten Ausführungsform eines Differenzialsystems kann der Frequenzumrichter 6a, 6b eliminiert und die Arbeitsmaschine 1 mit mehreren drehzahlfesten Betriebspunkten betrieben werden.

Fig. 1 bis Fig. 3 zeigen ein Differenzialsystem in dem der erste Antrieb mit einem Hohlrad, der Abtrieb mit einem Planetenträger und der zweite Antrieb mit einem Sonnenrad verbunden sind. In einer weiteren Variante kann der zweite Antrieb mit dem Planetenträger 7, der erste Antrieb mit dem Hohlrad 8 und der Abtrieb mit dem Sonnenrad 9 verbunden werden. Weitere alternative Kombinationen sind ebenfalls von der Erfindung erfasst.

Fig. 4 zeigt die Drehzahl- und Leistungsparameter eines erfindungsgemäßen Differenzialsystems, beispielsweise für eine Pumpe. Die Darstellung zeigt Leistungs- und Drehzahlwerte für eine Pumpe als Arbeitsmaschine 1, eine Antriebsmaschine 4 und einen Differenzialantrieb 5 jeweils aufgetragen über den Drehzahlwerten der Antriebswelle 2 ("Pumpendrehzahl"). Die Antriebsmaschine 4 ist mit dem Netz 12 verbunden und damit ist ihre Drehzahl ("Motordrehzahl") konstant - in dem gezeigten Beispiel ca. 1.500 1/min für eine vierpolige Drehstrommaschine in einem 50 Hz-Netz. Der Arbeitsdrehzahlbereich für die Antriebswelle 2 geht von 68% bis 100%, wobei bei 100% der gewählte Nenn- bzw. Maximalpunkt des Differenzialsystems ist. Entsprechend dem Übersetzungsverhältnis des Differenzialsystems geht dabei die Drehzahl des Differenzialantriebes 5 ("Servodrehzahl") von -2.000 1/min bis 1.500 1/min, wobei die Drehzahl von ca. 1.500 1/min die für dieses Beispiel gewählte Synchrondrehzahl (im dargestellten Beispiel ebenfalls eine 4-polige Drehstrommaschine im 50Hz-Netz) des Differenzialantriebes 5 ist. In etwa bei dieser Synchrondrehzahl liefert der Differenzialantrieb 5 sein Nenndrehmoment. Das Nenndrehmoment bezeichnet dabei jenes maximale Drehmoment, welches eine Drehstrommaschine unter den gegebenen Umgebungsbedingungen dauerhaft zur Verfügung stellen kann.

Fig. 4 zeigt, dass der Differenzialantrieb 5 generatorisch (-) und motorisch (+) betrieben wird. Da die maximal erforderliche Leistung des Differenzialantriebes 5 im generatorischen (-) Bereich (ca. 110kW) geringer als die im motorischen (+) Bereich (ca. 160kW) ist, kann der Differenzialantrieb 5 dauerhaft im generatorischen (-) Bereich im sogenannten Feldschwächebereich betrieben werden, womit für den Differenzialantrieb 5 eine höhere (über dessen Synchrondrehzahl liegende) Drehzahl - jedoch mit reduziertem Drehmoment - realisierbar ist. Damit kann auf einfache Weise der Drehzahlbereich für die Arbeitsmaschine 1 bis zum Betriebspunkt "C" erweitert werden. Ist das Differenzialsystem gemäß Fig. 3 konfiguriert, so können durch Änderung des Drehfeldes die Arbeitspunkte "A" und "B" angefahren werden. D.h. das Differenzialsystem kann im Falle einer erfindungsgemäßen direkten Anbindung des Differenzialantriebes 5 an das Netz 12 (ohne Frequenzumrichter 6a, 6b - entspricht einer erfindungsgemäßen Ausführung wie zu Fig. 3 beschrieben) Betriebspunkte über fast den gesamten Betriebsdrehzahlbereich der Arbeitsmaschine 1 realisieren.

In einer besonders einfachen Ausführungsform eines Differenzialsystems kann der Frequenzumrichter als sogenanntes 2Q-System (2-Quadranten-Frequenzumrichter) ausgelegt sein, wodurch das Differenzialsystem dann nur für den motorischen (+)Bereich konzeptioniert ist. Damit kann der netzseitige Gleichrichter 6b z.B. auch als einfacher Diodengleichrichter ausgeführt werden. In dieser Auslegungsvariante eines Differenzialsystems, kann man auch hier die Arbeitsmaschine 1 im Falle einer erfindungsgemäßen direkten Anbindung des Differenzialantriebes 5 an das Netz 12 (ohne Frequenzumrichter 6a, 6b - entspricht einer erfindungsgemäßen Ausführung wie zu Fig. 2 beschrieben) sowohl in ihrem Minimal- als auch in ihrem Maximalpunkt betreiben.

Ist der Differenzialantrieb 5 als polumschaltbare Drehstrommaschine ausgelegt, kann man durch entsprechende Umschaltung der Polpaarzahl auch Drehzahlen zwischen Minimal- und Maximaldrehzahl realisieren.

Der Punkt "T" in Fig. 4 markiert die sogenannte "Grunddrehzahl" der Antriebswelle 2, bei der die Drehzahl des Differenzialantriebes 5 gleich Null ist. Idealerweise wird dieser Punkt "T" in einen Arbeitsbereich gelegt, in dem die Anlage über große Zeitanteile betrieben wird. In diesem Betriebspunkt kann die Motorbremse 13, 14 aktiviert werden, womit der Differenzialantrieb 5 nicht betrieben werden muss und in weiterer Folge damit zusammenhängende Verluste und Verschleiß vermieden werden. Im motorischen (+) Bereich des Kennfeldes wird der Antrieb parallel von der Antriebsmaschine 4 und dem Differenzialantrieb 5 angetrieben. Die Summe beider Leistungen ist die Antriebsleistung für die Antriebswelle 2 ("Systemleistung") abzüglich anfallender Systemverluste. Im generatorischen (-) Bereich muss die Antriebsmaschine 4 die Leistung des Differenzialantriebes 5 ("Servoleistung") kompensieren, wodurch die Systemgesamtleistung ("Systemleistung") die Antriebsleistung der Antriebsmaschine 4 ("Motorleistung") abzüglich der Leistung des Differenzialantriebes 5 ist. D.h., dass wirkungsgradmäßig der motorische (+) Bereich besser ist.

Grundsätzlich ist festzustellen, dass der Leistungsfluss über den Differenzialantrieb 5 umso kleiner und somit der Systemgesamtwirkungsgrad umso höher ist, je näher die Pumpendrehzahl ("Pumpendrehzahl") bei der Grunddrehzahl "T" liegt. Da mit zunehmender Pumpendrehzahl auch die erforderliche Antriebsleistung steigt, kann jedoch im Vergleich zu einem Antrieb gemäß Stand der Technik durch den parallelen Antrieb der Antriebsmaschine 4 und des Differenzialantrieb 5 die erforderliche Größe der Antriebsmaschine 4 um die Größe des Differenzialantriebes 5 reduziert werden.

Die einzelnen beschriebenen Maßnahmen zum Sperren bzw. zum Betreiben des Differenzialantriebes 5 bei den beschriebenen Betriebspunkten können selbstverständlich entweder einzeln oder in beliebiger Kombination miteinander eingesetzt werden, sodass sich je nach Anwendungsfall wenigstens ein Betriebspunkt aber auch beliebig viele Betriebspunkte für den Triebstrang realisieren lassen, auch wenn der Frequenzumrichter oder sogar der Differenzialantrieb außer Betrieb ist.

Während des Betriebes des Triebstranges kann auch zwischen den beschriebenen Betriebspunkten gewechselt werden, womit ein drehzahlvariabler Betrieb möglich wird. Bei diesen Betriebspunkten wird der Differenzialantrieb 5, sofern er in Betrieb ist, jeweils mit unterschiedlichen Drehzahlen betrieben, bei denen es sich aber jeweils um Synchrondrehzahlen handelt, da der Differenzialantrieb direkt bzw. gegebenenfalls nur über den Transformator 11 an das Netz 12 angeschlossen ist.

Als Arbeitsmaschine 1 ist in Fig. 1 bis 3 beispielhaft symbolisch eine Pumpe dargestellt. Das hier beschriebene Konzept ist jedoch auch bei Antrieben für alle anderen Arten vom Arbeitsmaschinen anwendbar, wie z.B. Kompressoren, Ventilatoren und Förderbänder, Mühlen, Brecher, etc. oder Energiegewinnungsanlagen und dergleichen.

Im Falle des Einsatzes des erfindungsgemäßen Systems bei einer Energiegewinnungsanlage arbeitet die Antriebsmaschine 4 im Wesentlichen im generatorischen Betrieb und demzufolge dreht sich der Leistungsfluss im gesamten Triebstrang um.

Fährt man das erfindungsgemäße Differenzialsystem mit direkt (ohne Frequenzumrichter 6a, 6b) an das Netz 12 anschließbarem Differenzialantrieb 5 hoch, so wird vorzugsweise zuerst die Antriebsmaschine 4 an das Netz geschaltet, während der zweite Antrieb (Sonnenwelle 9 bzw. Differenzialantrieb 5) vorzugsweise mittels Betriebsbremse 13, 14 oder mittels Arretierung eingebremst bleibt. Damit erreicht die Arbeitsmaschine 1 den Betriebspunkt "T". Anschließend wird das Differenzialsystem entweder in diesem Betriebspunkt betrieben oder der Differenzialantrieb 5 ans Netz geschaltet. Dabei stellt sich in Folge am Differenzialantrieb 5 jene Drehzahl ein, welche sich durch die gewählte/voreingestellte Drehfeldrichtung bzw. Polpaarzahl am Differenzialantrieb 5 ergibt. Der sich in Folge für die Arbeitsmaschine 1 einstellende Betriebspunkt ergibt sich entsprechend der für den Differenzialantrieb 5 gewählten Drehfeldrichtung bzw. Polpaarzahl und den Übersetzungsverhältnissen des Differenzialgetriebes 3 und der Anpassungsgetriebestufe 10.

Das System kann aber natürlich auch auf jede andere Weise hochgefahren werden, z.B. dadurch, dass die Antriebsmaschine 4 und der Differenzialantrieb 5 gleichzeitig ans Netz geschaltet werden oder dass zuerst der Differenzialantrieb 5 und dann die Antriebsmaschine 4 ans Netz geschaltet werden. Bei z.B. nicht elektrischen Antriebsmaschinen kann der Differenzialantrieb 5 ebenfalls vor, gleichzeitig mit und nach der Antriebsmaschine zugeschaltet werden.

Die Arbeitsmaschine 1 kann in dieser Konfiguration, d.h. ohne Frequenzumrichter nicht kontinuierlich drehzahlvariabel betrieben werden. Wenn die Arbeitsmaschine 1 z.B. eine Fördereinrichtung in einem Leitungssystem ist, kann im Leitungssystem nach der Arbeitsmaschine 1 eine Drossel oder eine Klappe oder ein Bypass oder ein Ventil angeordnet sein. Damit kann man gegebenenfalls eine Regelung der Durchflussmenge zwischen den sich aufgrund fixer Drehzahlen des Differenzialsystems einstellenden ebenfalls fixen Durchflussmengen oder Förderhöhen realisieren.

Für eine hohe Anlagenverfügbarkeit ist es von großem Vorteil, bei Ausfall des Frequenzumrichters 6a, 6b das Gesamtsystem ohne Unterbrechung weiter betreiben zu können. Hierbei sind jedoch folgende Randbedingungen zu beachten:
Dies ist einerseits das Systemverhalten, vor allem im System-Betriebsbereich zwischen den Betriebspunkten "B" und "C", in dem der Differenzialantrieb 5 generatorisch (-) mit hoher Drehzahl arbeitet. Fällt der Frequenzumrichter 6a, 6b in diesem Betriebsbereich aus, so wird der Differenzialantrieb 5 augenblicklich beschleunigt und läuft Gefahr, in einen schädigenden Überdrehzahlbereich zu kommen.

Dies kann mit dem erfindungsgemäßen Antriebssystem verhindert werden, indem vorzugsweise die Bremse 13, 14 oder irgendeine andere, auf die Drehzahl des zweiten Antriebs wirkende Verzögerungsvorrichtung so schnell aktiviert wird, dass diese zwar nicht unbedingt den zweiten Antrieb zum Stillstand bringt, jedoch eine systemschädigende Überdrehzahl des zweiten Antriebs des Differenzialsystems bzw. des Differenzialantriebes 5 verhindert.

Ist es gewünscht, den Betriebspunkt "T" anzufahren, wird der zweite Antrieb des Differenzialsystems eingebremst.
Soll einer der Betriebspunkte "B" oder "A" angefahren werden, so wird in einem weiteren, vorzugsweise parallelen Schritt der Differenzialantrieb 5 direkt mit dem Netz 12 verbunden. Geschieht dies ausreichend schnell, so kann auf eine Aktivierung einer der oben beschriebenen Verzögerungsvorrichtungen verzichtet werden. Verzichtet man darüber hinaus auf die Möglichkeit, den Betriebspunkt "B" anzufahren, erspart man sich eine z.B. Wendeschütz-Schaltung und fährt gleich entweder vorzugsweise den Betriebspunkt "T" oder alternativ den Betriebspunkt "A" an, indem man den Differenzialantrieb 5 im dazu erforderlichen Drehsinn des Ständerdrehfeldes mit dem Netz 12 verbindet.

Will man den Betriebspunkt "B" anfahren, so kann man die Verzögerungseinrichtung auch zur drehzahlgeregelten Netzsynchronisation des Differenzialantriebes 5 einsetzen, indem diese so aktiviert wird, dass sich am Differenzialantrieb 5 im Wesentlichen dessen Synchrondrehzahl einstellt, bevor er mit dem Netz 12 verbunden wird.

Mit einer Verzögerungseinrichtung kann man prinzipiell auch einen kontinuierlichen drehzahlvariablen Betrieb im System-Betriebsbereich zwischen den Betriebspunkten "C" und "T" realisieren. Dies bietet sich z.B. dann an, wenn der Differenzialantrieb 5 ausfällt, oder die Leistung des Differenzialantriebes 5 bzw. des Wechselrichters 6a, 6b nicht ausreicht ein gefordertes Betriebsdrehmoment bereitzustellen.

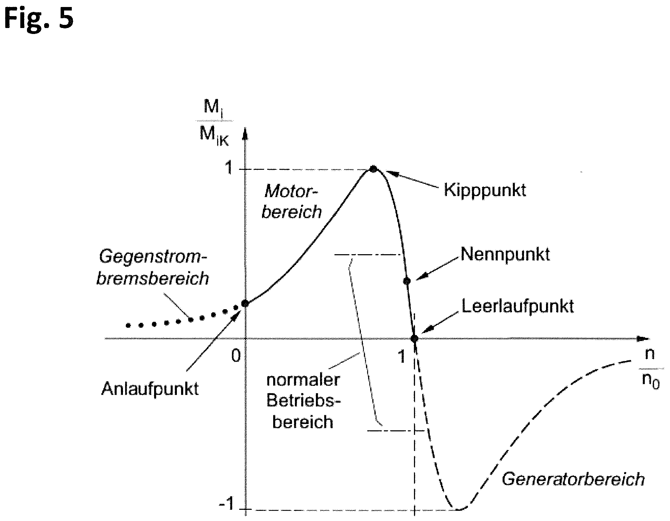

Fig. 5 zeigt eine Kennlinie einer Drehstrommaschine (beispielsweise einsetzbar als Differenzialantrieb 5) bei der das Drehfeld so an ein Netz angeschlossen ist, dass sich erfindungsgemäß gem. Fig. 4 der Betriebspunkt "A" (in Fig. 5 "Nennpunkt" der Drehstrommaschine) einstellen würde. Im System-Betriebsbereich zwischen den Punkten "C" und "T" würde sich die Drehstrommaschine dabei entlang des punktierten Teils der Kennlinie ("Gegenstrom-Bremsbereich") bewegen. Aus der Darstellung in Fig. 5 kann man erkennen, dass das durch eine Drehstrommaschine im Gegenstrom-Bremsbereich typischerweise realisierbare Drehmoment ($M_i/M_{iK}$) wesentlich kleiner als deren NennDrehmoment ist. Das Drehmoment im Gegenstrom-Bremsbereich kann man jedoch durch z.B. eine spezielle Ausführung der Rotorstäbe der Drehstrommaschine erhöhen. Sollte dies nicht ausreichen, das Differenzialsystem auf einen gewünschten drehzahlfesten Betriebspunkt hin zu regeln, so wird vorzugsweise zusätzlich eine Verzögerungseinrichtung, beispielsweise eine bereits beschriebene Bremse, aktiviert. Dies wird auch dann bevorzugt, wenn der Differenzialantrieb 5 bei Ausfall des Frequenzumrichters 6a, 6b im System-Betriebsbereich oberhalb von "T" (motorischer (+) Bereich) in den generatorischen (-) Bereich des Kennfeldes gem. Fig. 4 kommt. Die Verzögerungseinrichtung wird in beiden Fällen vorzugsweise solange aktiviert, bis einerseits der Differenzialantrieb 5 direkt mit den Netz verbunden ist und andererseits die System-Betriebsdrehzahl sich im generatorischen (-) Bereich des Kennfeldes ($\leq$ "T") bewegt.

Allfällige Betriebspunkte mit einer reduzierten Förderleistung der Arbeitsmaschine 1 zwischen den ohne Frequenzumrichter 6a, 6b realisierbaren drehzahlfesten Betriebspunkten mit fixer Drehzahl werden mit einer Drosseleinrichtung geregelt. Diese Drosseleinrichtung kann beispielsweise eine Drossel, eine Klappe, ein Bypass oder ein Ventil, welche z.B. im Leitungssystem nach der Arbeitsmaschine 1 positioniert sein können, geregelt. Wenn die Arbeitsmaschine 1 z.B. ein mechanischer Antrieb ist, kann die Drosseleinrichtung beispielsweise eine Bremse, ein Retarder oder dergleichen sein, um die Leistung der Antriebsmaschine 1 zu verringern.

In diesem Fall können jedoch nur Betriebspunkte "unterhalb" (in Richtung kleinerer Drehzahl bzw. Fördermenge oder Leistung) des jeweiligen drehzahlfesten (fixen) Betriebspunktes angefahren werden. Um den gesamten Betriebsbereich des Systems wirkungsgradoptimal zu realisieren, kann erfindungsgemäß zwischen den fixen Drehzahlpunkten entsprechend den betrieblichen Erfordernissen variiert werden. Um das Gesamtsystem möglichst wirkungsgradoptimal zu betreiben, wird mit dem Differenzialantrieb 5 vorzugsweise immer der nächsthöhere (in Richtung höherer Drehzahl bzw. Fördermenge) drehzahlfeste Betriebspunkt ("B", "T" oder "A") eingestellt und mittels der Drosseleinrichtung ein darunter liegender Betriebspunkt angefahren.

In einer bevorzugten, erfindungsgemäßen Ausführungsform wird allerdings zur betriebsbedingt geforderten Regelung von Durchflussmenge und Förderhöhe zwischen den drehzahlfesten Betriebspunkten "A", "T" und "B" gewechselt, ohne eine Drosseleinrichtung einsetzen zu müssen.

Befindet sich das System zum Zeitpunkt des Ausfalls des Frequenzumrichters 6a, 6b in einem Betriebspunkt zwischen "B" und "T", so wird vorzugsweise der Differenzialantrieb 5 entweder direkt ans Netz 12 geschaltet, sodass der Betriebspunkt "A" angefahren wird, oder es wird durch Einbremsen des zweiten Antriebs des Differenzialsystems der Betriebspunkt "T" einstellt.

Befindet sich das System zum Zeitpunkt des Ausfalls des Frequenzumrichters 6a, 6b in einem Betriebspunkt zwischen "T" und "A", so wird vorzugsweise der Differenzialantrieb 5 derart direkt ans Netz 12 geschaltet, dass direkt der Betriebspunkt "A" angefahren wird, ohne dass eine Verzögerungseinrichtung des zweiten Antriebs des Differenzialsystems aktiviert werden muss (sofern wie oben beschrieben die System-Betriebsdrehzahl z.B. nicht unter "T" fällt).

Das beschriebene Regelungskonzept mit den drehzahlfesten Betriebspunkten "A", "T" und "B" ist erfindungsgemäß auch auf Systeme mit einem polschaltbaren Differenzialantrieb 5 erweiterbar, wodurch sich eine entsprechend größere Anzahl drehzahlfester Betriebspunkte ergibt, zwischen denen dann betriebsoptimal umgeschaltet werden kann.

## Patentansprüche

1. Verfahren zum Betreiben eines Antriebsstrangs mit einer Antriebswelle (2), einer Antriebsmaschine (4) und mit einem Differenzialgetriebe (3) mit drei An- bzw. Abtrieben, wobei ein Abtrieb mit der Antriebswelle (2), ein erster Antrieb mit der Antriebsmaschine (4) und ein zweiter Antrieb mit einem elektrischen Differenzialantrieb (5) verbunden ist, der über einen Frequenzumrichter (6a, 6b) mit einem Netz (12) verbindbar ist, wobei die Antriebswelle (2) bei drehzahlfesten Betriebspunkten betrieben werden kann, **dadurch gekennzeichnet, dass** der Differenzialantrieb (5) über den Frequenzumrichter (6a, 6b) betrieben wird oder alternativ über eine parallel zum Frequenzumrichter (6a, 6b) liegende Leitung (15) direkt bzw. nur über einen Transformator (11) an das Netz (12) geschaltet und mit einer Synchrondrehzahl betrieben wird, dass eine Arbeitsmaschine (1) an der Antriebswelle (2) bei einem der folgenden Betriebspunkten betrieben wird:

   • einem drehzahlfesten Betriebspunkt mit einer Grunddrehzahl (T), wenn der zweite Antrieb, z.B. ein Sonnenrad (9), des Differenzialgetriebes (3) still steht,
   • durch einen polschaltbaren Differenzialantrieb (5) bei einem oder mehreren drehzahlfesten Betriebspunkten,
   • durch Umdrehen der Drehfeldrichtung des Differenzialantriebes (5) bei einem oder mehreren drehzahlfesten Betriebspunkten, und dass die Arbeitsmaschine (1) bei einem Ausfall des Frequenzumrichters (6a, 6b) bei einem nächsthöheren drehzahlfesten Betriebspunkt betrieben wird.

2. Verfahren nach Anspruch 1, **dadurch gekennzeichnet, dass** der Differenzialantrieb (5) über die Leitung (15, 18) an das Netz (12) geschaltet wird, wenn der Frequenzumrichter (6a, 6b) einen Defekt hat bzw. ausfällt.

3. Verfahren nach Anspruch 1 oder 2, **dadurch gekennzeichnet, dass** während des Betriebes zwischen den Betriebspunkten gewechselt wird.

4. Verfahren nach einem der Ansprüche 1 bis 3, **dadurch gekennzeichnet, dass** der zweite Antrieb bei einem Ausfall des Frequenzumrichters (6a, 6b) und einem Betrieb der Arbeitsmaschine (1) unter der Grunddrehzahl (T) mittels einer Verzögerungseinrichtung, z.B. eine kraft- und/oder formschlüssige Bremse (13, 14), ein Retarder, eine Sperre oder dergleichen, die auf den zweiten Antrieb, z.B. ein Sonnenrad des Planetengetriebes (3), wirkt, gebremst wird.

5. Verfahren nach einem der Ansprüche 1 bis 4, **dadurch gekennzeichnet, dass** bei einem Ausfall des Frequenzumrichters (6a, 6b), während der Differenzialantrieb (5) unterhalb der Grunddrehzahl (T) betrieben wird, die Verzögerungseinrichtung so lange aktiviert wird, bis der nächsthöhere drehzahlfeste Betriebspunkt oder einer der nächsthöheren drehzahlfesten Betriebspunkte erreicht ist, jedoch maximal bis zur Grunddrehzahl (T).

6. Verfahren nach einem der Ansprüche 1 bis 5, **dadurch gekennzeichnet, dass** die Förderleistung der Arbeitsmaschine (1) bei einem Betrieb bei einem drehzahlfesten Betriebspunkt mittels einer Drosseleinrichtung verringert wird.

**Claims**

1. Method for operating a drive train having a drive shaft (2), a drive machine (4) and a differential gear (3) having three drives and outputs, wherein one output is connected to the drive shaft (2), a first drive is connected to the drive machine (4) and a second drive is connected to an electrical differential drive (5) which can be connected to a network (12) via a frequency converter (6a, 6b), wherein the drive shaft (2) can be operated at burst-proof operating points, **characterized in that** the differential drive (5) is operated via the frequency converter (6a, 6b) or, alternatively, is switched directly via a line (15) disposed parallel to the frequency converter (6a, 6b) or connected to the network (12) only via a transformer (11) and is operated at a synchronous speed, **in that** a driven machine (1) is operated at the drive shaft (2) at one of the following operating points:

   • a burst-proof operating point with a basic speed (T) when the second drive, e.g. a sun gear (9), of the differential gear (3) is stationary,
   • at one or more burst-proof operating points by a pole-switchable differential drive (5),
   • at one or more burst-proof operating points by reversing the direction of the rotating field of the differential drive (5),

   and **in that**, in the event of a failure of the frequency converter (6a, 6b), the driven machine (1) is operated at a next-higher burst-proof operating point.

2. Method according to claim 1, **characterized in that** the differential drive (5) is connected to the network (12) via the line (15, 18) if the frequency converter (6a, 6b) has a defect or fails.

3. Method according to claim 1 or 2, **characterized in that** switching between the operating points is performed during operation.

4. Method according to one of claims 1 to 3, **characterized in that** the second drive is braked in the event of a failure of the frequency converter (6a, 6b) and an operation of the driven machine (1) below the basic speed (T) by means of a deceleration device, e.g. a force-locking and/or form-locking brake (13, 14), a retarder, a lock or the like, which acts on the second drive, e.g. a sun gear of the planetary gearbox (3) .

5. Method according to one of claims 1 to 4, **characterized in that**, in the event of a failure of the frequency converter (6a, 6b) while the differential drive (5) is being operated below the base speed (T), the deceleration device is activated until the next higher burst-proof operating point or one of the next higher burst-proof operating points is reached, but at most up to the base speed (T).

6. Method according to one of claims 1 to 5, **characterized in that** the delivery rate of the driven machine (1) is reduced by means of a throttle device during operation at a burst-proof operating point.

**Revendications**

1. Procédé de fonctionnement d'une transmission avec un arbre d'entraînement (2), une machine d'entraînement (4) et avec un engrenage différentiel (3) muni de trois entrées ou sorties, dans lequel une sortie est reliée à l'arbre d'entraînement (2), une première entrée à la machine d'entraînement (4) et une deuxième entrée à un entraînement différentiel électrique (5) qui peut être raccordé à un réseau (12) par l'intermédiaire d'un convertisseur de fréquence (6a, 6b), dans lequel l'arbre d'entraînement (2) peut être piloté à des points de fonctionnement à vitesse de rotation fixe, **caractérisé en ce que** l'entraînement différentiel (5) est piloté par l'intermédiaire du convertisseur de fréquence (6a, 6b) ou alternativement est raccordé au réseau (12) par l'intermédiaire d'une ligne (15) parallèle au convertisseur de fréquence (6a, 6b), directement ou seulement par l'intermédiaire d'un transformateur (11), et piloté à une vitesse de rotation synchrone,
**en ce qu'**une machine de travail (1) sur l'arbre d'entraînement (2) est pilotée à l'un des points de fonctionnement suivants:

   • un point de fonctionnement à vitesse de rotation fixe avec une vitesse de rotation de base (T) quand la deuxième entrée, par exemple une roue solaire (9), de l'engrenage différentiel (3) est à l'arrêt,
   • à un ou plusieurs points de fonctionnement à vitesse de rotation fixe par l'intermédiaire d'un entraînement différentiel (5) à pôles commutables,

• à un ou plusieurs points de fonctionnement à vitesse de rotation fixe par l'inversion du sens du champ tournant de l'entraînement différentiel (5),

et **en ce que** la machine de travail (1) est pilotée, en cas de défaillance du convertisseur de fréquence (6a, 6b), au point de fonctionnement à vitesse de rotation fixe le plus proche vers le haut.

2. Procédé selon la revendication 1, **caractérisé en ce que** l'entraînement différentiel (5) est raccordé au réseau (12) par la ligne (15, 18) quand le convertisseur de fréquence (6a, 6b) est défectueux ou en panne.

3. Procédé selon la revendication 1 ou 2, **caractérisé en ce que** la transmission passe d'un point de fonctionnement à l'autre pendant le fonctionnement.

4. Procédé selon l'une des revendications 1 à 3, **caractérisé en ce qu'**en cas de défaillance du convertisseur de fréquence (6a, 6b) et de fonctionnement de la machine de travail (1) en dessous de la vitesse de rotation de base (T), la deuxième entrée est freinée au moyen d'un dispositif de décélération, par exemple d'un frein à friction et/ou à engagement positif (13, 14), d'un retardateur, d'un verrou ou similaire agissant sur la deuxième entrée, par exemple une roue solaire du train planétaire (3).

5. Procédé selon l'une des revendications 1 à 4, **caractérisé en ce que**, en cas de défaillance du convertisseur de fréquence (6a, 6b) pendant que l'entraînement différentiel (5) fonctionne en dessous de la vitesse de rotation de base (T), le dispositif de décélération est activé jusqu'à ce que le point de fonctionnement à vitesse de rotation fixe le plus proche vers le haut ou l'un des points de fonctionnement à vitesse de rotation fixe les plus proches vers le haut soient atteints, mais au maximum jusqu'à la vitesse de rotation de base (T).

6. Procédé selon l'une des revendications 1 à 5, **caractérisé en ce que** le rendement de la machine de travail (1) est restreinte au moyen d'un dispositif d'étranglement lors du fonctionnement à un point de fonctionnement à vitesse de rotation fixe.

**Fig. 1**

EP 3 238 337 B1

Fig. 2

**Fig. 3**

EP 3 238 337 B1

Fig. 4

Fig. 5

$\dfrac{M_i}{M_{iK}}$

Kipppunkt

Nennpunkt

Leerlaufpunkt

Motorbereich

Generatorbereich

$\dfrac{n}{n_0}$

1

0

-1

normaler
Betriebsbereich

Gegenstrom-
bremsbereich

Anlaufpunkt

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2014183142 A1
- DE 19502224 C1
- AT 507394 A
- WO 2012001138 A